Europäisches Patentamt

European Patent Office

Office européen des brevets

(11) Veröffentlichungsnummer: **0 116 282**
A2

# (12) EUROPÄISCHE PATENTANMELDUNG

(21) Anmeldenummer: **84100167.0**

(22) Anmeldetag: **10.01.84**

(51) Int. Cl.³: **C 08 J 3/08**
C 08 L 81/06, C 08 J 5/04

(30) Priorität: **18.01.83 DE 3301346**

(43) Veröffentlichungstag der Anmeldung:
**22.08.84 Patentblatt 84/34**

(84) Benannte Vertragsstaaten:
**BE DE FR GB IT**

(71) Anmelder: **BASF Aktiengesellschaft**
**Carl-Bosch-Strasse 38**
**D-6700 Ludwigshafen(DE)**

(72) Erfinder: **Fischer, Juergen, Dr.**
**Thomas-Mann-Strasse 62**
**D-6700 Ludwigshafen(DE)**

(72) Erfinder: **Seiler, Erhard, Dr.**
**Erpolzheimer Strasse 1**
**D-6700 Ludwigshafen(DE)**

(72) Erfinder: **Blinne, Gerd, Dr.**
**Im Woogtal 7**
**D-6719 Bobenheim(DE)**

(54) **Lösung von Polyethersulfon in einem organischen Lösungsmittel und ihre Verwendung.**

(57) Die Erfindung betrifft eine stabile, niedrigviskose Lösung von Polyethersulfon in einem Lösungsmittelgemisch aus Chloroform und Dichlormethan, sowie ein Verfahren zur Herstellung von thermoplastisch verformbaren, kunstharzgebundenen Endlosfadensträngen (Prepreg-Rovings). Dabei werden Endlosfaserstränge durch ein Bad geführt, wo sie mit der Lösung des Polyethersulfons getränkt werden. Die getrockneten Prepreg-Rovings können zur Herstellung von Rohren nach dem Wickelverfahren oder - in Form von Bändern oder Platten aus mehreren nebeneinanderliegenden Rovings - als flächiges Halbzeug verwendet werden.

EP 0 116 282 A2

Croydon Printing Company Ltd.

Lösung von Polyethersulfon in einem organischen Lösungsmittel und ihre Verwendung

---

Die Erfindung betrifft eine stabile, niedrigviskose Lösung von Polyethersulfon in einem organischen Lösungsmittel, sowie ihre Verwendung, insbesondere zur Herstellung von thermoplastisch verformbaren, kunstharzgebundenen Endlosfadensträngen (Prepreg-Rovings), wobei man Endlosfaserstränge mit der Lösung des Polyethersulfons imprägniert.

Zur Herstellung von verformbaren Prepreg-Rovings werden üblicherweise Endlosfaserstränge (Rovings) mit einem Kunststoff imprägniert. Die Prepreg-Rovings können z.B. auf einen Kern gewickelt und zu rotationssymmetrischen Fertigkeiten, z.B. Rohren, weiterverarbeitet werden, oder sie können parallel gelegt und zu plattenförmigem Halbzeug verbunden werden. Dieses Verfahren wurde bisher praktisch ausschließlich mit hochvernetzenden Reaktionsharzen durchgeführt, wobei aber nachteilig ist, daß die letztendlich hergestellten Fertigteile einem Aushärtungsprozeß unterworfen werden müssen.

Es wurde auch schon versucht, als Kunststoffmatrix thermoplastische Kunststoffe einzusetzen. Hierbei sind vor allem die hochtemperaturbeständigen Kunststoffe, insbesondere die Polyethersulfone von Interesse. Nach der EP-A 56 703 werden Rovings mit einer Schmelze eines thermoplastischen Kunststoffs, z.B. eines Polyethersulfons, imprägniert. Eine vollständige Tränkung der Faserstränge ist dabei aber sehr schwierig, so daß die daraus hergestellten Verbundmaterialien keine optimalen Eigenschaften aufweisen. Darüber hinaus sind Polyethersulfon-Schmelzen erst bei sehr hohen Temperaturen oberhalb von 390°C genügend niedrigviskos. Bei diesen Temperaturen kann aber schon eine thermische Schädigung der Polymeren eintreten. Außerdem müssen hier verhältnismäßig niedermolekulare Polyethersulfone eingesetzt werden, die zur Versprödung neigen und gegen Spannungsrißkorrosion anfällig sind.

Nach der GB-A 1 570 000 und der EP-A 47 576 werden Bänder aus parallel liegenden Rovings mit Lösungen von hochtemperaturbeständigen Kunststoffen imprägniert; nach dem Verdampfen des Lösungsmittels werden die imprägnierten Roving-Lagen zwischen Folien-Lagen aus thermoplastischen Kunststoffen gelegt und die Verbundmaterialien zu flächigem Halbzeug verpreßt. Es hat sich gezeigt, daß Lösungen von Polyethersulfon in dem hierbei verwendeten Lösungsmittel Dichlormethan nur sehr kurze Zeit stabil sind: schon nach wenigen Minuten bildet sich ein Addukt, welches aus der Lösung ausfällt.

Dd/Kl

0116282

Das Imprägnieren von Rovings aus Lösungen von Polyethersulfon in Dichlormethan ist also nur in sehr eingeschränktem Maß möglich.

Es ist zwar möglich, stabile Lösungen von Polyethersulfonen in anderen Lösungsmitteln, wie N-Methylpyrrolidon, Diphenylsulfon, Dimethylsulfoxid oder Dimethylformamid herzustellen. Diese Lösungsmittel haben aber einen sehr hohen Siedepunkt, so daß sie nur schwierig wieder zu entfernen sind.

Der Erfindung lag also die Aufgabe zugrunde, eine niedrigviskose, stabile Lösung von Polyethersulfon in einem niedrig siedenden Lösungsmittel bereit zu stellen, die zum vollständigen Tränken von Endlosfasersträngen geeignet ist.

Diese Aufgabe wird gelöst, wenn man ein Lösungsmittel verwendet aus 20 bis 80, vorzugsweise 40 bis 60 Gew.-% Chloroform und 80 bis 20, vorzugsweise 60 bis 40 Gew.-% Dichlormethan.

Derartige Lösungen sind mehrere Tage stabil, so daß die oben geschilderten Probleme nicht auftreten.

Chloroform allein löst Polyethersulfon nicht, es ist deshalb überraschend, daß Polyethersulfon in dem erfindungsgemäß angewandten Lösungsmittelgemisch gut löslich ist. Vorzugsweise arbeitet man mit Polyethersulfon-Lösungen, die einen Feststoffgehalt von 10 bis 30 Gew.-%, insbesondere von 15 bis 25 Gew.-% und eine Viskosität beim Tränken unterhalb von 800 mPas, vorzugsweise zwischen 100 und 300 mPas haben.

Zum Einsatz kommen übliche Endlosfaserstränge, z.B. aus Glas, Kohlenstoff oder aromatischen Polyamiden (Aramid-Fasern). Die Rovings können einzeln oder in Bandform nebeneinanderliegend durch das Lösungsmittelbad gezogen werden. Die Rovings sollen möglichst gut gespreizt, d.h., flächig auseinandergezogen werden, was durch bekannte Vorrichtungen bewirkt werden kann.

Die verwendeten Polyethersulfone haben mittlere Molekulargewichte ($M_n$) von 20.000 bis 40.000, vorzugsweise zwischen 25.000 und 35.000. Der Fasergehalt des getränkten Rovings soll vorzugsweise 30 bis 85, insbesondere 45 bis 65 Vol.-% betragen. Der Fasergehalt kann durch die Konzentration der Tränklösung, die Verweilzeit im Bad, sowie durch ein nach dem Tränkbad angeordnetes Quetschwalzenpaar beeinflußt werden. Anschließend an das Tränkbad durchlaufen die getränkten Rovings eine Trockenstrecke, wo die Lösungsmittel, vorzugsweise bei Temperaturen oberhalb von 70°C, insbesondere zwischen 80 und 150°C verdampft werden.

Die imprägnierten, kunstharzgebundenen Prepreg-Rovings können - in Form von Einzelfäden oder von 0,5 bis 2 cm breiten Bändern - klebfrei auf Spulen gewickelt werden. Sie stellen ein lagerstabiles Halbzeug dar, das thermoplastisch weiterverarbeitbar ist. Man kann sie z.B. - gegebenenfalls auch direkt nach dem Imprägnieren und Trocknen - nach dem Durchlaufen einer Vorheizstrecke auf Kerne aufwickeln, dort durch Erhitzen auf Temperaturen oberhalb von 340°C verbinden und auf diese Weise rotationssymmetrische Fertigteile, z.B. Rohre, herstellen, die nicht mehr nachgehärtet werden müssen. Ferner kann man den imprägnierten Roving direkt auf einem Wickelkern positionieren und erst dann das Lösungsmittel entfernen.

Flächige Prepregs können hergestellt werden, indem man eine Vielzahl von Rovings parallel durch das Tränkbad führt und das entstehende, vorzugsweise 2 bis 150 cm breite, imprägnierte, kunstharzgebundene Roving-Band nach dem Trocknen in plattenförmige Stücke schneidet oder endlos auf Spulen wickelt.

Diese vorzugsweise 0,1 bis 0,5 mm dicken, unidirektional faserverstärkten Prepregs können schichtweise übereinandergestapelt werden, wobei die einzelnen Prepregs in beliebige Winkel zueinander gelegt werden können. Die Stapel können dann durch Verpressen bei Temperaturen oberhalb des Schmelzbereichs des Polyethersulfons zu Fertigteilen verarbeitet werden. Dabei heizt man den Stapel außerhalb der Presse auf und legt dann in die Presse ein, die auf einer Temperatur unterhalb des Glaspunktes des Polyethersulfons gehalten wird.

Die erfindungsgemäß hergestellte Lösung von Polyethersulfon (PES) läßt sich sehr vorteilhaft auch zum Tränken von Geweben und von Matten aus Glas-, Kohle- oder Aramidfasern verwenden. Durch den niedrigen Siedepunkt des Dichlormethan/Chloroform-Gemisches können die getränkten Gewebe und Matten sehr einfach vom anhaftenden Lösungsmittel befreit werden. Sind die Matten bzw. Gewebe in die PES-Matrix eingebettet, so können sie thermoplastisch in Formteilpressen weiterverarbeitet werden. Man erwärmt dazu die Zuschnitte auf Temperaturen von 350 bis 400°C und verpreßt bei einer Temperatur unterhalb von 225°C.

Weiterhin kann die erfindungsgemäße PES-Lösung zum Verkleben von Formteilen aus PES eingesetzt werden. Hier stellt diese Lösung ein optimales Hilfsmittel für die Verarbeiter von PES dar, da die Klebenaht aus dem gleichen Werkstoff besteht wie die verklebten Teile.

Zur Herstellung von Folien aus PES kann die erfindungsgemäße Lösung ebenfalls sehr gut eingesetzt werden. Man gießt die Lösung dabei in einem kontinuierlichen Prozess auf eine Foliengießform, die ihrerseits durch eine Trockenzone zum Abdampfen des Lösungsmittels geführt wird. Dabei wird die Temperatur langsam von Raumtemperatur auf 230°C erhitzt, um eine Blasenbildung zu vermeiden. Die resultierende Folie wird auf Spulen aufgewickelt.

Auch zum Lackieren von elektrisch leitenden Drähten ist die PES-Lösung geeignet. Man zieht dazu einen oder meherer Drähte durch eine PES-Lösung, führt den oder die Drähte senkrecht aus dem Tränkbad heraus und läßt sie durch einen Trockenturm mit ansteidender Temperatur (von Raumtemperatur auf 100°C) laufen, bis sie völlig lösungsmittelfrei aufgewickelt werden können.

Die in den Beispielen genannten Teile und Prozente beziehen sich – sofern nicht anders vermerkt – auf das Gewicht.

Beispiele

1) Eine 15 %ige und eine 20 %ige Lösung von PES (Ultrason E 2000 der BASF AG) mit einem mittleren Molekulargewicht ($M_n$) von 25 000, sowie eine 20 %ige Lösung von PES (Ultrason E 3000) mit einem mittleren Molekulargewicht ($M_n$) von 35 000 wurden bei 20°C hergestellt, indem vorgetrocknetes PES in Granulatform bis zur gewünschten Konzentration in ein Gemisch aus Dichlormethan und Chloroform (50/50) eingerührt wurde. Die Viskosität wurde sofort nach Auflösung und dann nochmals nach 24 Std jeweils bei 20°C bestimmt.

Folgende Werte wurden gefunden:

|  | Ultrason E 2000 | | Ultrason E 3000 |
|---|---|---|---|
|  | 15 % | 20 % | 20 % |
| frisch | 110 mPas | 300 mPas | 700 mPas |
| 24 Std | 110 mPas | 300 mPas | 700 mPas |

Diese stabilen Lösungen wurden zum Tränken von Glas-, Kohlenstoff- und Aramid-Fasern eingesetzt.

0116282

2)  Ein Glasfaserroving mit 1200 tex der Firma Gevetex wurde von einem Spulenbaum kommend mit einer Geschwindigkeit von 150 m/h durch ein Tränkbad mit einer 20 %igen Lösung (nach Beispiel 1) gezogen. Der Thermoplastanteil wurde mit Hilfe der Fadenspannung und eines Quetschwalzenpaares auf 40 Vol.-% reguliert. Nach dem Tränkbad läuft der getränkte Roving durch eine Trockenzone, wobei das Lösungsmittel bei 130°C völlig abgezogen wurde. Der trockene Prepreg-Roving mit 60 Vol.-% Faseranteil wird auf eine Trommel gewickelt und ist bis zur Weiterverwendung beliebig lange lagerstabil.

3)  Ein Aramidfaserroving mit 7900 tex wurde wie in Beispiel 2 getränkt und getrocknet. Er hatte nach dem Aufwickeln auf eine Lagertrommel einen Faseranteil von 55 Vol.-%.

4)  5 Aramidfaserrovings mit je 7900 tex wurden wie in Beispiel 3 mit PES-Lösung getränkt. Durch Parallelführung der Rovings erhält man nach der Trockenzone ein "Prepreg-Band" mit 12 mm Breite. Der Fasergehalt im trockenen Band betrug 50 Vol.-%. Das Band wurde wie in den vorhergehenden Beispielen auf Spulen gelagert.

5)  Ein 300 mm breites Rovingband aus 170 parallelen Kohlenstoffaserrovings mit je 6000 Filamenten wurde durch ein Tränkbad mit einer 20 %igen PES-Lösung (nach Beispiel 1) geführt, der Auftrag mit Hilfe von Quetschwalzen reguliert, anschließend wurde beim Durchlaufen eines Umlaufofens das Lösungsmittel abgezogen und das nunemhr trockene, unidirektional verstärkte Halbzeug wurde zum Schluß mit einem Querschneider zu stapelbaren Zuschnitten von 0,25 mm Dicke geschnitten. Der Fasergehalt in der "Prepreg-Platte" betrug 55 Vol.-%.

6)  Ein 300 mm breites Rovingband aus 94 parallelen Glasfaserrovings mit 1200 tex/Rovings wurde wie in Beispiel 5 getränkt, getrocknet und geschnitten. Das erhaltene unidirektional verstärkte Halbzeug hatte einen Fasergehalt von 60 Vol.-% bei einer Nominaldicke von 0,25 mm.

7)  Ein 370 mm breites Rovingband aus 100 parallelen Aramidfasern mit 7900 tex/Roving wurde wie in Beispiel 5 getränkt, getrocknet und zugeschnitten. Das erhaltene unidirektional verstärkte Halbzeug hatte einen Fasergehalt von 60 Vol.-%.

8)  Ein nach Beispiel 2 hergestellter Prepreg-Roving mit 60 Vol.-% Glasfasernateil wurde folgendermaßen verarbeitet:

Der Prepreg-Roving wurde, von der Spule kommend durch eine Vorwärmestrecke geführt, wobei er auf 250°C erwärmt wurde. Anschließend wurde er auf einen zylindrischen Wickeldorn mit 40 mm Durchmesser und 1 m Länge gewickelt. Der Wickeldorn war auf eine Wickelmaschine aufgespannt, die es ermöglichte, den Prepreg-Roving unter einem Winkel von 45° zur Dornachse abzulegen. Der Wickeldorn selbst war mit einer Reflexionsschürze weitgehend umschlossen. Die zum Verschmelzen der abgelegten Prepreg-Rovings nötige Temperatur von 390°C wird mittels Hellstrahlern erzielt. Durch Hin- und Herbewegen des Fadensupportes konnte ein viellagiges Rohr mit ±45° Faseranordnung und 3 mm Wandstärke hergestellt werden. Das Rohr hatte nach Abkühlen und Entformen einen Glasfaseranteil von 60 Vol.-%.

9) Ein nach Beispiel 3 hergestellter Prepreg-Roving wurde wie in Beispiel 8 verarbeitet. Das resultierende Rohr hatte einen Fasergehalt von 55 Vol.-%.

10) Ein Kohlenfaserprepreg mit 40 Vol.-% PES wurde auf einer Wickelmaschine mit Hellstrahlern und Reflexionsschürze wie in Beispiel 8 zu Rohren für hohe Torsionslasten verarbeitet. Der Dorndurchmesser war hier 50 mm und die Länge 440 mm. Die Fadenablage in Bezug auf die Längsachse erfolgte im 90°/ +45°/ -45°/ 90°-Muster. Nach dem Verschmelzen wurde abgekühlt und entformt.

11) Auf einer Wickelmaschine wurde mit dem nach Beispiel 2 hergestellten Prepreg-Rovings mit 60 Vol.-% Glasfaser ein Druckbehälter mit zylindrischem Mittelteil und halbkugelförmigen Dornkappen gewickelt. Der Durchmesser war 150 mm, die Länge 400 mm. Die zum innigen Verschmelzen der Prepreg-Rovings nötige Temperatur von über 350°C wurde wieder mittels Hellstrahlern und einer Reflexionsschürze um den Dorn erzielt. Nach Ende des Bewickelns wird abgekühlt und entformt. Der Wandstärke des Behälters war 2 mm, der Glasgehalt 60 Vol.-%.

12) Das Halbzeug aus Beispiel 6 wurde wie folgt weiterverarbeitet:

Acht dieser Halbzeugplatten wurden mit einsinniger Faserorientierung übereinander in ein Presswerkzeug gelegt und bei 380°C 2 Minuten bei einem Druck von 100 bar zu einer unidirektional verstärkten 2 mm dicken Prüfplatte verpresst.

**0116282**

13) Das Halbzeug aus Beispiel 6 wurde wie folgt weiterverarbeitet:

Acht unidirektional verstärkte Prepreg-Platten wurden mit folgendem Lagenaufbau in ein Presswerkzeug übereinandergeschichtet (Winkel in Bezug auf die spätere Prüfrichtung)

$$0°/ +45°/ -45°/ 0°/ 0°/ -45°/ +45°/ 0°$$

Die Pressbedingungen waren die gleichen wie in Beispiel 12 angegeben. Die fertige Prüfplatte hatte eine Zugfestigkeit von 750 N/mm$^2$ in 0°-Richtung, einen Zug-E-Modul von 25 000 N/mm$^2$ und einen Schubmodul von 6000 N/mm$^2$.

14) Die nach Beispiel 5 erhaltenen Prepreg-Platten mit 55 Vol.-% C-Faser wurden folgendermaßen weiterverarbeitet:

Acht Halbzeugplatten wurden mit einsinniger Faserorientierung übereinander in ein Presswerkzeug gelegt und bei 380°C 2 Minuten lang bei 100 bar zu einer unidirektional verstärkten Prüfplatte von 2 mm Dicke verpreßt.

Die mechanische Prüfung parallel zur Faserrichtung ergab eine Zugfestigkeit von 1920 N/mm$^2$, einen Zug-E-Modul von 120 000 N/mm$^2$, eine Biegefestigkeit von 1300 N/mm$^2$ und einen Biegemodul von 100 000 N/mm$^2$ (Werte bei 23°C).

15) Die nach Beispiel 7 erhaltenen Prepreg-Platten mit 60 Vol.-% Aramidfasern wurden wie folgt verarbeitet:

Acht Halbzeugplatten wurden mit einsinniger Faserorientierung übereinander in ein Presswerkzeug gelegt und bei 380°C für 2 Minuten bei einem Druck von 100 bar zu einer unidirektional verstärkten Prüfplatte mit 2 mm Dicke verpreßt. Der Fasergehalt der Prüfplatten war ebenfalls 60 Vol.-%.

Die mechanische Prüfung parallel zur Faserrichtung ergab eine Zugfestigkeit dieses Materials von 1700 N/mm$^2$, einen E-Modul von 76 000 N/mm$^2$, eine Biegefestigkeit von 1300 N/mm$^2$.

16) Acht Halbzeugplatten mit unidirektionaler Aramidfaserverstärkung und einem Fasergehalt von 50 Vol.-% werden in ein Presswerkzeug so übereinander gelegt, daß die Fasern oder Lagen mit der geplanten Belastungsrichtung (0° Richtung) folgende Winkel einschließen

0116282

$0^{\circ}$/ +45$^{\circ}$/ -45$^{\circ}$/ 0$^{\circ}$/ 0$^{\circ}$/ -45$^{\circ}$/ +45$^{\circ}$/ 0$^{\circ}$.

Das Lagenpaket wurde wie im Beispiel 15 zu einem Composit mit 50 Vol.-% Aramidfaser verpreßt.

Die mechanische Prüfung in 0$^{\circ}$-Richtung ergab eine Zugfestigkeit von 1050 N/mm$^2$ und einen Zug-E-Modul von 44 000 N/mm$^2$.

17) Naßimprägnieren von Glas-Geweben.

Eine 25 %ige Lösung von PES in Dichlormethan/Chloroform (1/1) wird zum Imprägnieren eines Glasgewebes der Firma Interglas eingesetzt. Dabei wird das Gewebe in einem Tränkvorgang mit PES-Lösung gefüllt, das Lösungsmittel wird bei steigender Temperatur von 80 bis 130$^{\circ}$C abgedampft und die trockene Platte wird in einer Presse bei 360$^{\circ}$C verpreßt. Der Glasgehalt der fertigen Platte betrug 32 Vol.-%. Im Zugversuch parallel zur Kett- bzw. Schußrichtung ergab sich ein E-Modul von 18 500 N/mm$^2$ und eine Zugfestigkeit von 250 N/mm$^2$.

18) Herstellen einer Klebeverbindung.

Eine 25 %ige Lösung von PES in Dichlormethan/Chloroform (1/1) wird zum Verkleben von zwei Formteilen aus PES verwendet. Dabei trägt man die Lösung auf beide Klebeflächen auf und fügt die Teile zusammen. Das Lösungsmittel wird zunächst bei niedriger Temperatur (40 - 80$^{\circ}$C), bei fortgeschrittenem Trockenen bei Temperaturen bis zu 130$^{\circ}$C entfernt. Danach ist die Klebestelle voll belastbar.

19) Foliengießen Eine 25 %ige Lösung von PES in Dichlormethan/Chloroform (1/1) wird in eine Form zum Herstellen von Folien gegossen. Das Lösungsmittel wird zuerst bei RT, dann - mit fortschreitender Trocknung - bei höheren Temperaturen bis zu 130$^{\circ}$C abgedampft. Die erhaltene 100 /um dicke Folie ist blasenfrei.

20) Drahtlackierung Eine 25 %ige Lösung von PES in Dichlormethan/Chloroform wird zum Beschichten von Drähten eingesetzt. Dabei werden die zu beschichtenden, ca. 1 mm dicken Kupfer-Drähte durch ein Bad mit der PES-Lösung gezogen. Nach dem Bad werden die überzogenen Drähte senkrecht nach oben durch eine Trockenstrecke geführt, wo bei 60 - 100$^{\circ}$C das Lösungs-

0116282

mittel entfernt wird. Die fertigen Drähte besitzen einen gut haftenden, 60 /um dicken Überzug von PES, der sich vor allem durch seine
gute Temperaturbeständigkeit auszeichnet (Glastemperatur = 225°C).

**0116282**

Patentansprüche

1. Lösung von Polyethersulfon in einem organischen Lösungsmittel, <u>dadurch gekennzeichnet</u>, daß das Lösungsmittel ein Gemisch ist aus 20 bis 80 Gew.-% Chloroform und 80 bis 20 Gew.-% Dichlormethan.

2. Lösung nach Anspruch 1, <u>gekennzeichnet durch</u> einen Feststoffgehalt von 10 bis 30 Gew.-%.

3. Verfahren zur Herstellung von thermoplastisch verformbaren, kunstharz-gebundenen Endlosfadensträngen (PrepregRovings), bei dem man Endlosfaserstränge durch ein Bad führt, wo sie mit einer Lösung eines Polyethersulfons getränkt werden, und dann das Lösungsmittel verdampft, <u>dadurch gekennzeichnet</u>, daß man eine Lösung nach Anspruch 1 verwendet.

4. Verfahren nach Anspruch 3, <u>dadurch gekennzeichnet</u>, daß das Polyether-sulfon ein mittleres Molekulargewicht zwischen 20.000 und 40.000 aufweist.

5. Verfahren nach Anspruch 3, <u>dadurch gekennzeichnet</u>, daß man die Pre-preg-Rovings auf einen Kern wickelt.

6. Prepreg-Rovings, hergestellt nach Anspruch 3, <u>dadurch gekennzeichnet</u>, daß sie einen Faseranteil von 30 bis 70 Vol.-% aufweisen.

7. Verfahren zur Herstellung von flächigen Prepregs, <u>dadurch gekennzeich-net</u>, daß man nach Anspruch 3 eine Vielzahl von Endlosfadensträngen parallel durch ein Tränkbad führt, und das entstehende Band nach dem Trocknen in Stücke schneidet oder endlos auf Spulen aufwickelt.

8. Flächige Prepregs, hergestellt nach Anspruch 7, <u>dadurch gekennzeich-net</u>, daß sie eine Breite von 2 bis 150 cm aufweisen.